# EUROPÄISCHE PATENTSCHRIFT

(11) **EP 3 397 865 B1**
(45) Veröffentlichungstag und Bekanntmachung des Hinweises auf die Patenterteilung: **12.02.2020**
(21) Anmeldenummer: 17714669.3
(22) Anmeldetag: 23.03.2017
(51) Int. Cl.: F04D 1/06, F04D 3/00, F04D 13/06

(54) **AKTUATOR FÜR AKTIVE FAHRWERKE VON KRAFTFAHRZEUGEN**
ACTUATOR FOR ACTIVE CHASSIS OF MOTOR VEHICLES
ACTIONNEUR POUR MÉCANISMES DE ROULEMENT ACTIFS DE VÉHICULES À MOTEUR

(30) Priorität: 07.04.2016 AT 502862016
(43) Veröffentlichungstag der Anmeldung: 07.11.2018
(73) Patentinhaber: MELECS EWS GmbH, 7011 Siegendorf (AT)
(72) Erfinder: MAYER, Martin Johann, 2651 Reichenau an der Rax (AT)
(74) Vertreter: Maier, Daniel Oliver
(86) Internationale Anmeldenummer: PCT/EP2017/056937
(87) Internationale Veröffentlichungsnummer: WO 2017/174368

(56) Entgegenhaltungen:
- GB-A- 210 273
- JP-A- S60 213 512
- US-A- 3 143 972
- US-A- 5 083 040

## Beschreibung

Die Erfindung betrifft einen Aktuator für aktive Fahrwerke von Kraftfahrzeugen mit einer Elektroantriebsmaschine und einer Pumpe.

Nach dem Stand der Technik sind Aktuatoren für aktive Fahrwerke von Kraftfahrzeugen vorwiegend als pneumatische oder hydraulische Kolben- oder Flügelzellenpumpen ausgeführt, wobei auch Kombinationen von z.B. pneumatischen mit hydraulischen Aktuatoren, von pneumatischen Aktuatoren mit mechanischen Maschinenelementen wie z.B. Federn oder von fluidischen mit elektrischen Aktuatoren vorkommen. Reybrouck et al. beschreiben in einer Publikation für das 21st Aachen Colloquium Automobile and Engine Technologie 2012 einen elektro-hydraulischen Aktuator, der eine Kolbenpumpe aufweist.

Die JPS 60 213 512 zeigt einen Aktuator für aktive Fahrwerke von Kraftfahrzeugen mit einem elektrohydraulischen Aktuator, der eine Kreiselpumpe aufweist.

Der genannte Ansatz weist in seiner bekannten Form den Nachteil auf, dass eine Kolbenpumpe hohe Druckschläge erzeugt, die kompensiert werden müssen. Die Kompensation dieser Druckschläge erfordert einen hohen Energieaufwand bei begrenzten Ressourcen eines Kraftfahrzeugs.
Weiterhin kann ein unzulässiger Druckanstieg nicht durch ein Abschalten der Kolbenpumpe verhindert bzw. rückgängig gemacht werden.
Außerdem erfordern Kolbenpumpen bestimmte Einbaulagen, d.h. sind im Hinblick auf ihre Anordnung in einem Fahrwerk nicht flexibel.
Darüber hinaus weisen Kolbenpumpen eine ungünstige Geräuschcharakteristik auf, die über aufwendige Maßnahmen der Dämmung verbessert werden müssen.
Der Erfindung liegt daher die Aufgabe zugrunde, einen gegenüber dem Stand der Technik verbesserten Aktuator anzugeben.

Erfindungsgemäß wird diese Aufgabe gelöst mit einem Aktuator der eingangs genannten Art,
bei dem die Pumpe von der Elektroantriebsmaschine ummantelt wird, und
bei dem die Pumpe als hydraulische Kreiselpumpe mit zumindest einem ersten Laufrad mit einem ersten Rotor, einem zweiten Laufrad mit einem zweiten Rotor und einem dritten Laufrad mit einem dritten Rotor ausgeführt ist.

Aufgrund der Ummantelung der Pumpe durch die Elektroantriebsmaschine wird die insbesondere bei begrenzten Bauraumbudgets in Fahrwerken von Kraftfahrzeugen günstige Eigenschaft einer besonders kompakten und platzsparenden Einheit erzielt und die Elektroantriebsmaschine wird durch ein durch die Pumpe strömendes Fluid gekühlt.
Im Vergleich zu Kolben- oder Flügelzellenpumpen etc. bewirkt der Einsatz einer als Kreiselpumpe ausgeführten Pumpe weiterhin den Vorteil geringer Druckstöße und folglich eines geringen Energiebedarfs bei der Kompensation dieser Druckstöße.
Eine Kreiselpumpe weist darüber hinaus eine günstige Geräuschcharakteristik sowie eine Unempfindlichkeit gegenüber negativen Druckdifferenzen auf.
Die Ausführung als hydraulische Pumpe bewirkt außerdem ein im Vergleich zu z.B. Pneumatikpumpen verbessertes Ansprechverhalten bzw. leistungsfähigere Regelzeiten.
Ferner ist eine Kreiselpumpe im Hinblick auf ihre Einbaulage flexibel.
Durch den modularen Aufbau des erfindungsgemäßen Aktuators und seine Erweiterbarkeit um beispielsweise zusätzliche Laufräder wird eine günstige Flexibilität im Hinblick auf geforderte Druckverläufe und Drucksteigerungen bei der Regelung des aktiven Fahrwerks erzielt.

Eine vorteilhafte Ausgestaltung erhält man, wenn das zumindest erste Laufrad über eine erste Regeleinheit, das zweite Laufrad über eine zweite Regeleinheit und das dritte Laufrad über eine dritte Regeleinheit einzeln angetrieben und gesteuert bzw. geregelt werden.
Durch diese Maßnahme wird eine optimale Anpassung jedes einzelnen Laufrades an die Strömungsverhältnisse innerhalb der Pumpe erzielt.
Weiterhin wird eine Serienschaltung des zumindest ersten Laufrades, des zweiten Laufrades und des dritten Laufrades in Abhängigkeit von der Druckanforderung bezüglich eines durch die Pumpe zu transportierenden Fluids ermöglicht.

Eine bevorzugte Lösung wird erzielt, wenn die Elektroantriebsmaschine zumindest einen ersten Deckel aufweist, auf dem ein erster Wellenlagersitz ausgebildet ist. Diese Maßnahme bewirkt eine Verringerung der Teilezahl für die Elektroantriebsmaschine. Auf separate Lager und Befestigungsmittel für die Verbindung einer Welle mit der Elektroantriebsmaschine kann verzichtet werden.

Es ist günstig, wenn die Pumpe eine Welle umfasst, auf der zumindest ein erstes Mantelelement angeordnet ist.
Durch diese Maßnahme wird erstens der Vorteil erzielt, dass die Welle gegen das durch die Pumpe strömende Fluid abgeschirmt wird. Zweitens bewirkt das erste Mantelelement bei entsprechender Ausgestaltung eine strömungstechnisch günstige Führung des Fluids.

Nachfolgend wird die Erfindung anhand von Ausführungsbeispielen näher erläutert.

Es zeigen beispielhaft:
- Fig. 1:: Einen Schrägriss einer beispielhaften Ausführung eines Aktuators in Schnittdarstellung, wobei eine Elektroantriebsmaschine und eine Pumpe mit einem ersten Laufrad, einem zweiten Laufrad und einem dritten Laufrad gezeigt werden, und
- Fig. 2:: Einen Schrägriss einer beispielhaften Ausführung eines Aktuators in Schnittdarstellung, wobei ein Querschnitt einer Elektroantriebsmaschine und einer Pumpe dargestellt ist und ein zweites Laufrad sowie ein drittes Laufrad gezeigt werden.

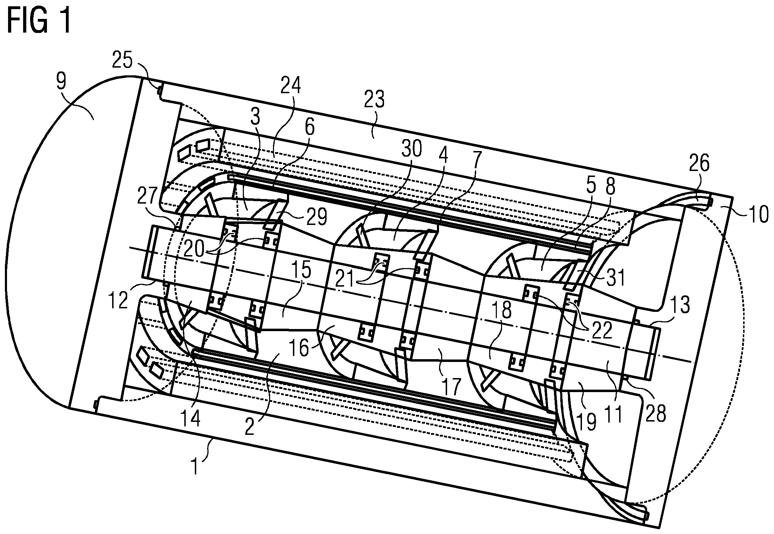

Ein in Fig. 1 gezeigter Schrägriss einer beispielhaften Ausführung eines erfindungsgemäßen Aktuators in Schnittdarstellung umfasst eine Elektroantriebsmaschine 1 und eine Pumpe 2.
Die Elektroantriebsmaschine 1 weist einen ersten Deckel 9, einen zweiten Deckel 10, ein Maschinengehäuse 23 und einen Stator 24 auf.
Die als hydraulische Kreiselpumpe ausgeführte Pumpe 2 umfasst eine Welle 11 sowie ein erstes Laufrad 3, ein zweites Laufrad 4 und ein drittes Laufrad 5.
Die Längsachsen der Elektroantriebsmaschine 1 und der Pumpe 2 sind koaxial zueinander angeordnet.
Der Aktuator ist in einem Federbein eines nicht dargestellten aktiven Fahrwerks eines autonomen Kraftfahrzeugs angeordnet. Dabei handelt es sich um einen vorteilhaften Einsatzort. Erfindungsgemäß sind verschiedene Positionen und Lagen für die Anordnung des Aktuators möglich.

Die Elektroantriebsmaschine 1 ist zylindrisch ausgeführt und ummantelt die Pumpe 2. Das druckfeste Maschinengehäuse 23, über das die Kontaktierung der Elektroantriebsmaschine 1 und der Pumpe 2 erfolgt, ist aus Gründen des Leichtbaus in Aluminium ausgeführt und hat die Form eines Zylindermantels. An den Stirnflächen dieses Zylindermantels sind, ebenfalls als Aluminium-Leichtbaukomponenten ausgeführt, der druckfeste erste Deckel 9 und der druckfeste zweite Deckel 10 angeordnet.
An der Innenseite des Maschinengehäuses 23 und mit diesem verbunden ist ein zylindermantelförmiger Stator 24 angeordnet. Dessen Längsachse verläuft koaxial zu jener des Maschinengehäuses 23.
Der Stator 24 umfasst eine aus Kupfer ausgeführte und mit Gießharz umgossene Wicklung.

Der erste Deckel 9 weist eine ringförmige erste Ausnehmung 25 mit einem Dichtelement für die Erzeugung einer Dichtwirkung zwischen dem ersten Deckel 9 und dem Maschinengehäuse 23 auf. Die nicht dargestellten Dichtelemente können z.B. als O-Ringe ausgeführt sein.
Auf dem zweiten Deckel 10 ist aus demselben Grund und an derselben Stelle wie auf dem ersten Deckel 9 eine ringförmige zweite Ausnehmung 26 angeordnet.
Auf dem ersten Deckel 9 ist ein zylindrischer erster Wellenlagersitz 12 und auf dem zweiten Deckel 10 ein zylindrischer zweiter Wellenlagersitz 13 ausgebildet. Die Längsachsen des ersten Wellenlagersitzes 12 und des zweiten Wellenlagersitzes 13 verlaufen koaxial zu der Längsachse der Welle 11.
Auf der inneren Mantelfläche des ersten Wellenlagersitzes 12 ist eine ringförmige dritte Ausnehmung 27 mit einem Dichtelement für die Erzeugung einer Dichtwirkung zwischen dem ersten Deckel 9 und der Welle 11 angeordnet. Der zweite Wellenlagersitz 13 weist aus demselben Grund und an derselben Stelle wie der erste Wellenlagersitz 12 eine ringförmige vierte Ausnehmung 28 auf. Die nicht dargestellten Dichtelemente können z.B. als O-Ringe ausgeführt sein.

Nicht dargestellte Ein- und Auslässe für das durch die Pumpe 2 strömende Fluid sind als Bohrungen mit Ein- und Ausströmgittern für die Stabilisierung des Fluids ausgeführt. Sie können z.B. auf dem ersten Deckel 9 und dem zweiten Deckel 10 oder auf dem Maschinengehäuse 23 angeordnet sein.

Die Welle 11 der Pumpe 2 ist in dem ersten Wellenlagersitz 12 und dem zweiten Wellenlagersitz 13 unbeweglich gelagert.
Auf ihr sequentiell angeordnet und um die Längsachse der Welle 11 drehbar gelagert sind das erste Laufrad 3 mit einem ersten Rotor 6, das zweite Laufrad 4 mit einem zweiten Rotor 7 und das dritte Laufrad 5 mit einem dritten Rotor 8, die von dem Fluid durchströmt werden.
Das erste Laufrad 3, das zweite Laufrad 4 und das dritte Laufrad 5 weisen eine zylindrische Form auf und an deren Umfängen sind der erste Rotor 6, der zweite Rotor 7 und der dritte Rotor 8 angeordnet.

Der erste Rotor 6, der zweite Rotor 7 und der dritte Rotor 8 sind aus hochfesten Aluminium-Leichtbaurohren mit aufgeschrumpften Weicheisenkernen, welche Magnete aufweisen, ausgeführt. Auf den Magneten sind zu deren Sicherung gegen unbeabsichtigte Bewegungen sowie gegen Lösen Bandagen aus Kunststoff vorgesehen.

Radial bezüglich der Stirnflächen des ersten Laufrades 3, des zweiten Laufrades 4 und des dritten Laufrades 5 sind auf dem ersten Laufrad 3 ein erstes Radialstrebenelement 29, auf dem zweiten Laufrad 4 ein zweites Radialstrebenelement 30 und auf dem dritten Laufrad 5 ein drittes Radialstrebenelement 31 angeordnet.
Das erste Radialstrebenelement 29 ist mit dem ersten Rotor 6 sowie mit einem ersten Lagerelement 20 verbunden, das zweite Radialstrebenelement 30 mit dem zweiten Rotor 7 sowie mit einem zweiten Lagerelement 21 und das dritte Radialstrebenelement 31 mit dem dritten Rotor 8 und einem dritten Lagerelement 22.
Das erste Radialstrebenelement 29, das zweite Radialstrebenelement 30 und das dritte Radialstrebenelement 31 sind in einer Weise ausgeführt und angeordnet, dass sie unmittelbar an die Mantelfläche der Welle 11 angrenzen.
Das erste Lagerelement 20, das zweite Lagerelement 21 und das dritte Lagerelement 22 sind aus Keramik ausgeführt und umfassen in dieser beispielhaften Ausführung jeweils zwei Lagerringe, die auf die Welle 11 aufgepresst sind.

Über Bohrungen entlang deren Längsachsen sequentiell auf die Welle 11 aufgepresst sind ein erstes Mantelelement 14, ein zweites Mantelelement 15, ein drittes Mantelelement 16, ein viertes Mantelelement 17, ein fünftes Mantelelement 18 und ein sechstes Mantelelement 19.
Zwischen dem ersten Mantelelement 14 und dem zweiten Mantelelement 15 ist das erste Lagerelement 20 angeordnet, zwischen dem dritten Mantelelement 16 und dem vierten Mantelelement 17 das zweite Lagerelement 21 und zwischen dem fünften Mantelelement 18 und dem sechsten Mantelelement 19 das dritte Lagerelement 22.
Das erste Mantelelement 14 grenzt an den ersten Wellenlagersitz 12 und das sechste Mantelelement 19 an den zweiten Wellenlagersitz 13.
Das erste Mantelelement 14, das zweite Mantelelement 15, das dritte Mantelelement 16, das vierte Mantelelement 17, das fünfte Mantelelement 18 und das sechste Mantelelement 19, das erste Lagerelement 20, das zweite Lagerelement 21 und das dritte Lagerelement 22 sowie das erste Radialstrebenelement 29, das zweite Radialstrebenelement 30 und das dritte Radialstrebenelement 31 ummanteln die Welle 11 vollständig und bilden zusammen die Form von drei hintereinander angeordneten Doppelkonen.
Die Doppelkonen bewirken eine strömungstechnisch günstige Führung des Fluids.

Die Elektroantriebsmaschine 1 ist als bürstenloser Gleichstrommotor ausgeführt und wird von einem, die Pumpe 2 durchströmenden Fluid gekühlt. Die Versorgung erfolgt mit 48 V aus dem Bordnetz eines Kraftfahrzeuges. Die Leistung der Elektroantriebsmaschine 1 ist auf 2400 W begrenzt.
Die Kontaktierung erfolgt flüssigkeitsdicht über das Maschinengehäuse 23. Die Elektroantriebsmaschine 1 treibt über den Stator 24 den ersten Rotor 6, den zweiten Rotor 7 und den dritten Rotor 8 der Pumpe 2 an, setzt somit das erste Laufrad 3, das zweite Laufrad 4 und das dritte Laufrad 5 in Bewegung.
Das Fluid, z.B. eine Hydraulikflüssigkeit, wird über den nicht dargestellten Einlass im Bereich des ersten Deckels 9 oder des Maschinengehäuses 23 zugeführt und über ein Einströmgitter stabilisiert. Der minimale Zulaufdruck beträgt 0,5 bar. Es strömt über drei Druckstufen, d.h. durch das erste Laufrad 3, das zweite Laufrad 4 und das dritte Laufrad 5, sein Druck steigert sich dabei.

Über ein nicht dargestelltes Ausströmgitter und einen Auslass im Bereich des Maschinengehäuses 23 oder des zweiten Deckels 10 wird das Fluid aus der Pumpe 2 ausgeleitet.
Werden abweichend von der in diesem Ausführungsbeispiel gezeigten Anordnung vier statt drei Druckstufen eingesetzt und wird jede Druckstufe angetrieben, so wird eine maximale Drucksteigerung von 100 bar erzielt.
Der maximale Volumenstrom des Fluids durch die Pumpe 2 beträgt 20 l/min.

Eine nicht dargestellte Steuer- bzw. Regeleinrichtung mit einer ersten Regeleinheit, einer zweiten Regeleinheit und einer dritten Regeleinheit ist für eine Spannung von 48 V ausgelegt und versorgt die Elektroantriebsmaschine 1 mit einer Leistung von höchstens 3000 W.
Das erste Laufrad 3 bzw. der erste Rotor 6 ist mit der ersten Regeleinheit verbunden, das zweite Laufrad 4 bzw. der zweite Rotor 7 mit der zweiten Regeleinheit und das dritte Laufrad 5 bzw. der dritte Rotor 8 mit der dritten Regeleinheit.
Die erste Regeleinheit, die zweite Regeleinheit und die dritte Regeleinheit sind untereinander vernetzt und ermöglichen eine getrennte Steuerung bzw. Regelung sowie eine beliebige Zusammenschaltung des ersten Laufrades 3, des zweiten Laufrades 4 und des dritten Laufrades 5 entsprechend dem geforderten Druckniveau des Fluids.
Weiterhin sind die erste Regeleinheit, die zweite Regeleinheit und die dritte Regeleinheit mit Sensoren und einer Regelausrüstung des aktiven Fahrwerks verbunden, welche die für die Regelung der Pumpe 2 erforderlichen Informationen bereitstellen. In dem Aktuator sind nicht dargestellte Drehwinkelgeber, Drucksensoren und Temperatursensoren angeordnet.

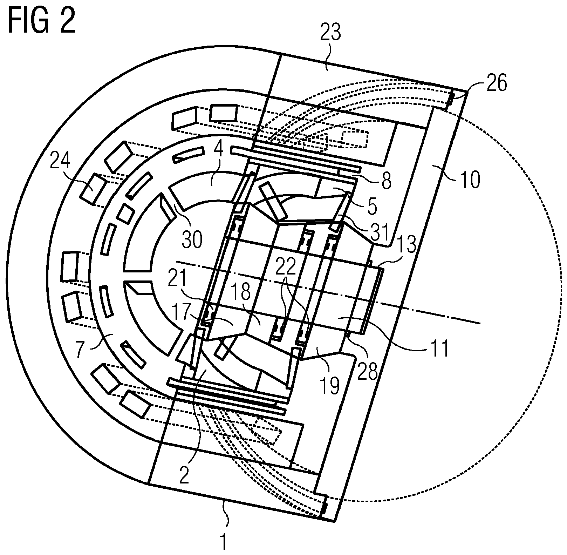

Ein in Fig. 2 gezeigter Schrägriss einer beispielhaften Ausführung eines erfindungsgemäßen Aktuators in Schnittdarstellung umfasst eine Elektroantriebsmaschine 1 und eine Pumpe 2.

Im Unterschied zu Fig. 1 ist in Fig. 2 ein Querschnitt der Elektroantriebsmaschine 1 und der Pumpe 2 dargestellt. Der Schnitt verläuft durch ein zweites Laufrad 4 in einem mittleren Bereich eines zweiten Lagerelementes 21.
Im Übrigen entspricht das gezeigte Prinzip jenem in Fig. 1.

### Liste der Bezeichnungen

- 1: Elektroantriebsmaschine
- 2: Pumpe
- 3: Erstes Laufrad
- 4: Zweites Laufrad
- 5: Drittes Laufrad
- 6: Erster Rotor
- 7: Zweiter Rotor
- 8: Dritter Rotor
- 9: Erster Deckel
- 10: Zweiter Deckel
- 11: Welle
- 12: Erster Wellenlagersitz
- 13: Zweiter Wellenlagersitz
- 14: Erstes Mantelelement
- 15: Zweites Mantelelement
- 16: Drittes Mantelelement
- 17: Viertes Mantelelement
- 18: Fünftes Mantelelement
- 19: Sechstes Mantelelement
- 20: Erstes Lagerelement
- 21: Zweites Lagerelement
- 22: Drittes Lagerelement
- 23: Maschinengehäuse
- 24: Stator
- 25: Erste Ausnehmung
- 26: Zweite Ausnehmung
- 27: Dritte Ausnehmung
- 28: Vierte Ausnehmung
- 29: Erstes Radialstrebenelement
- 30: Zweites Radialstrebenelement
- 31: Drittes Radialstrebenelement

## Patentansprüche

1. Aktuator für aktive Fahrwerke von Kraftfahrzeugen mit einer Elektroantriebsmaschine und einer hydraulischen Kreiselpumpe (2), **dadurch gekennzeichnet, dass**
die hydraulische Kreiselpumpe (2) von der Elektroantriebsmaschine (1) ummantelt wird, und
dass die hydraulische Kreiselpumpe mit zumindest einem ersten Laufrad (3) mit einem ersten Rotor (6), einem zweiten Laufrad (4) mit einem zweiten Rotor (7) und einem dritten Laufrad (5) mit einem dritten Rotor (8) ausgeführt ist.

2. Aktuator nach Anspruch 1, **dadurch gekennzeichnet, dass** das zumindest erste Laufrad (3) über eine erste Regeleinheit, das zweite Laufrad (4) über eine zweite Regeleinheit und das dritte Laufrad (5) über eine dritte Regeleinheit einzeln angetrieben und gesteuert bzw. geregelt werden.

3. Aktuator nach Anspruch 1, **dadurch gekennzeichnet, dass** die Elektroantriebsmaschine (1) zumindest einen ersten Deckel (9) aufweist, auf dem ein erster Wellenlagersitz (12) ausgebildet ist.

4. Aktuator nach Anspruch 1, **dadurch gekennzeichnet, dass** die Pumpe (2) eine Welle (11) umfasst, auf der zumindest ein erstes Mantelelement (14) angeordnet ist.

5. Aktuator nach Anspruch 4, **dadurch gekennzeichnet, dass** auf der Welle (11) ein zweites Mantelelement (15) angeordnet ist und dass zumindest zwischen dem zumindest ersten Mantelelement (14) und dem zweiten Mantelelement (15) ein erstes Lagerelement (20) angeordnet ist.

## Claims

1. Actuator for active chassis of motor vehicles, having an electric drive machine and a hydraulic centrifugal pump (2), **characterised in that** the hydraulic centrifugal pump (2) is encased by the electric drive machine (1), and that the hydraulic centrifugal pump is embodied with at least a first impeller (3) having a first rotor (6), a second impeller (4) having a second rotor (7), and a third impeller (5) having a third rotor (8).

2. Actuator according to claim 1, **characterised in that** the at least first impeller (3) is individually driven and controlled via a first control unit, the second impeller (4) via a second control unit and the third impeller (5) via a third control unit.

3. Actuator according to claim 1, **characterised in that** the electric drive machine (1) has at least one first cover (9) on which a first shaft bearing seat (12) is formed.

4. Actuator according to claim 1, **characterised in that** the pump (2) comprises a shaft (11) on which at least a first encasing element (14) is arranged.

5. Actuator according to claim 4, **characterised in that** a second encasing element (15) is arranged on the shaft (11) and that a first bearing element (20) is arranged at least between the at least first encasing element (14) and the second encasing element (15).

## Revendications

1. Actionneur pour des mécanismes de roulement actifs de véhicules automobiles comprenant un moteur d'entraînement électrique et une pompe centrifuge hydraulique (2), **caractérisé en ce que** la pompe centrifuge hydraulique (2) est enveloppée par le moteur d'entraînement électrique (1) et
**en ce que** la pompe centrifuge hydraulique est réalisée avec au moins une première roue à aubes (3) dotée d'un premier rotor (6), une seconde roue à aubes (4) dotée d'un second rotor (7) et une troisième roue à aubes (5) dotée d'un troisième rotor (8).

2. Actionneur selon la revendication 1, **caractérisé en ce que** la au moins une première roue à aubes (3), la seconde roue à aubes (4) et la troisième roue à aubes (5) sont respectivement entraînées et commandées ou régulées individuellement par l'intermédiaire d'un premier module de commande, d'un second module de commande et d'un troisième module de commande.

3. Actionneur selon la revendication 1, **caractérisé en ce que** le moteur d'entraînement électrique (1) comprend au moins un premier couvercle (9), sur lequel un premier support de palier d'arbre (12) est formé.

4. Actionneur selon la revendication 1, **caractérisé en ce que** la pompe (2) comprend un arbre (11), sur lequel un premier élément de chemise (14) est disposé.

5. Actionneur selon la revendication 4, **caractérisé en ce qu'**un second élément de chemise (15) est disposé sur l'arbre (11) et **en ce qu'**un premier élément de palier (20) est disposé entre le au moins un premier élément de chemise (14) et le second élément de chemise (15).
